# EUROPEAN PATENT SPECIFICATION

(11) **EP 1 860 784 B1**
(45) Date of publication and mention of the grant of the patent: **06.10.2010**
(21) Application number: 07107493.4
(22) Date of filing: 04.05.2007
(51) Int. Cl.: H04B 1/38

(54) **SIM card attachment/detachment guiding apparatus for a portable terminal**
Führungsvorrichtung zur Einsetzung/Entnahme von SIM-Karten für ein tragbares Endgerät
Appareil de guidage de fixation/retrait de carte SIM pour terminal portable

(30) Priority: 25.05.2006 KR 20060047055
(43) Date of publication of application: 28.11.2007
(73) Proprietor: Samsung Electronics Co., Ltd., Suwon-si, Gyeonggi-do (KR)
(72) Inventor: Seo, Jung-Hwan, Yeongtong-gu Suwon-si Gyeonggi-do (KR)
(74) Representative: Grünecker, Kinkeldey, Stockmair & Schwanhäusser Anwaltssozietät

(56) References cited:
- EP-A1- 1 133 065
- US-A1- 2006 040 560

## Description

### BACKGROUND OF THE INVENTION

### 1. Field of the Invention

The present invention generally relates to a Subscriber Identification Module (SIM) card attachment/detachment guiding apparatus for a portable terminal, which can guide insertion and removal of a SIM card so the SIM card can be easily and detachably assembled with a portable terminal.

### 2. Description of the Related Art

In general, conventional portable terminals provide a wide variety of functions, such as voice communication, radio playback, Internet access, MP3 music file download and playback, etc., and have miniaturized sizes according to consumer demands. Conventional portable terminals can also send and receive short messages using key buttons.

As the popularity of portable terminals has increased, portable terminals having various functions and designs have become more commercially available. Design of such portable terminals has headed not only toward compactness, slimness and lightness, but also toward providing multimedia capabilities to allow the user to pursue a wide variety of functions.

Since music and moving picture files use substantial memory, they require a separate SIM card as a memory card. Portable terminals are normally provided with a separate SIM card attachment apparatus on their bodies in order to attach a SIM card.

SIM cards contain almost all of the information required to operate portable terminals. Specifically, a SIM card has not only personal information of a subscriber, such as password, etc., but also data including related information such as a phone number, a network ID, etc.

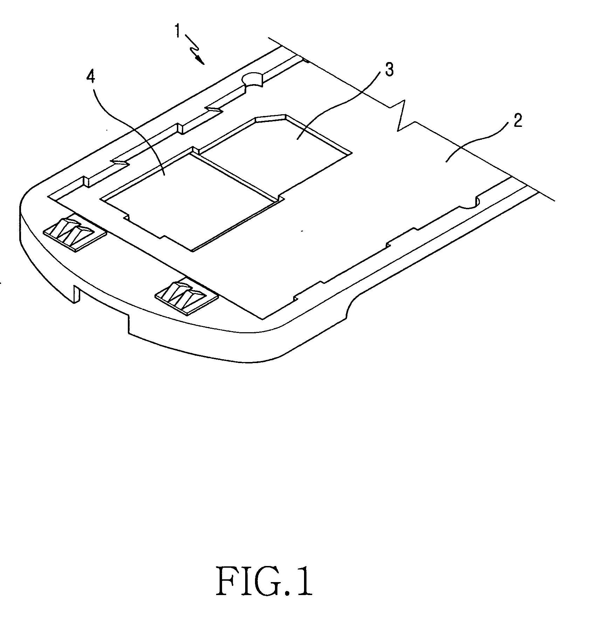

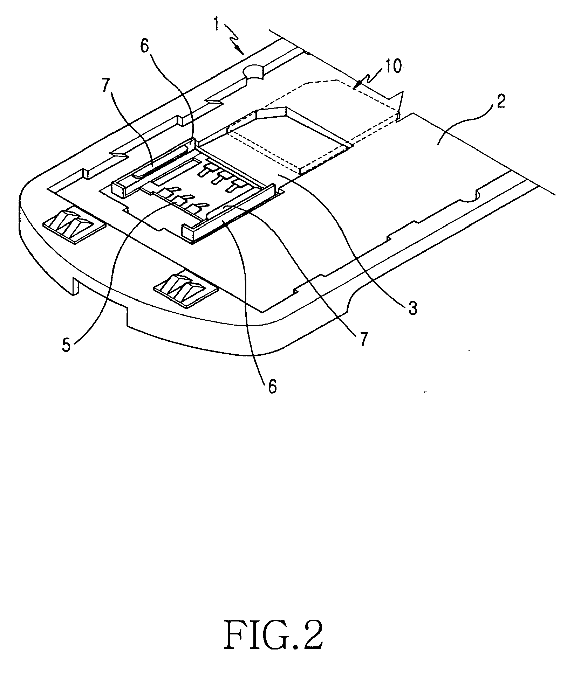

As shown in FIGS. 1 and 2, a conventional SIM card attachment apparatus includes a lower casing frame 2 which has a seating groove 3 defined in a position on a bottom surface thereof, and a terminal hole 4 defined in the seating groove 3, on which a battery pack of the portable terminal 1 is mounted. A terminal 5 of a connector extends through the terminal hole 4 to be connected to a socket (not shown) of the SIM card 10.

The SIM card 10 is interconnected with the terminal 5 of the connector. Guide rails 6 are formed in a lengthwise direction on both sides of the terminal 5 so the SIM card can be detachably mounted along the guide rails 6.

At least one support protrusion 7 is formed on an upper end of each guide rail 6 in a lengthwise direction of the rail 6 to simultaneously support the connector terminal 5 and the SIM card 10 at the time the socket of the SIM card 10 comes into contact with the connector terminal 5 in the terminal hole 4.

The SIM card 10 is received in the terminal hole 4 of the lower casing frame 2 of the portable terminal 1 in order to use a space of the portable terminal 1, and is then assembled with the portable terminal 1 by pushing the SIM card 10 into the seating groove 3.

However, since the SIM card 10 is interconnected with and separated from the portable terminal in such a manner that a user directly pushes and pulls the SIM card 10 in the seating groove 3, it is inconvenient for user to attach and detach the SIM card 10 to/from the conventional portable terminal 1.

Furthermore, since the portable terminal 1 does not have a separate space for the user to hold the SIM card 10, the user grasps and pulls the SIM card 10 with his/her hand or other implements in order to slide the SIM card 10. Therefore, there is a disadvantage in that the SIM card 10 can be destroyed when the user fails to adjust their grasp and holds the SIM card 10 too forcefully.

The patent application US 2006/0040560 A1 discloses a card holder for a SIM card comprising slide parts that are used to slide the card holder along the inside faces of guide walls of a connector housing. However, the insertion of the SIM card in the card holder can be quite cumbersome, as the SIM card has to be engaged on the edge of the card holder most distant from the SIM socket to enable the SIM card to be able to be slid with the card holder. Thus, the SIM card has to be fully inserted under the card holder first.

European patent application EP 1 133 065 A1 discloses a coupling device for a plug-in SIM, wherein a tray with first guiding means accommodates the plug-in SIM and second guiding means are formed on a contact base, in which the tray is accommodated. On each respective inside surface of both ends of the tray a SIM holding groove 17 is formed in which the plug-in SIM is inserted.

Thus, both above-referenced prior art documents require a quite difficult insertion process of the SIM card in the card holder, respectively tray.

### SUMMARY OF THE INVENTION

Accordingly, the present invention has been made to solve the above-mentioned problems occurring in the prior art, and it is the object of the present invention to provide a SIM card attachment/detachment guiding apparatus for a portable terminal, which can guide insertion and withdrawal of a SIM card so that the SIM card is easily and detachably assembled with the portable terminal.

This object is solved by the subject matter of the independent claim. Preferred embodiments are defined in the dependent claims.

It is an aspect of the present invention to provide a SIM card attachment/detachment guiding apparatus for a portable terminal, by which a SIM card can be attached to and detached from a portable terminal without use of a user's hands, thereby preventing the SIM card from being destroyed by an externally artificial force when the SIM card is held.

In order to accomplish this object and aspect of the present invention, there is provided a SIM card attachment/detachment guiding apparatus for a portable terminal, which includes a lower casing frame of a body having an opening defined therein; a sliding guide interconnected with and sliding in the opening, being stacked on a SIM card, and contacting and sliding along with the SIM card to insert and withdraw the SIM card from the opening when the sliding guide is pushed; and guide means provided in the opening, for guiding a sliding movement of the sliding guide.

The sliding guide includes a knob exposed to an outside, and a contact member on a lower surface of the knob that contacts the SIM card and moves along with the SIM card.

### BRIEF DESCRIPTION OF THE DRAWINGS

The above and other objects, features, and advantages of the present invention will be more apparent from the following detailed description taken in conjunction with the accompanying drawings, in which:
FIG. 1 is a perspective view showing a seating groove for a SIM card in a lower casing frame of a conventional portable terminal;
FIG. 2 is a perspective view showing a combination of a SIM card with the conventional portable terminal shown in FIG. 1;
FIG. 3 is an exploded perspective view showing the structure of a SIM card attachment/detachment guiding apparatus for guiding attachment and/or detachment of a SIM card to/from a portable terminal according to the present invention, in which a portion of the apparatus is cut off;
FIG. 4 is a perspective view showing a SIM card attachment/detachment guiding apparatus according to the present invention, in which the apparatus is assembled with the portable terminal;
FIG 5 is a longitudinal sectional view of the SIM card attachment/detachment guiding apparatus shown in FIG. 4;
FIG 6 is an enlarged view of FIG 5 showing the contact member of the sliding guide contacting the SIM card;
FIG 7 is a longitudinal sectional view illustrating the operation of a SIM card attachment/detachment guiding apparatus for a portable terminal according to the present invention;
FIG 8 is a perspective view illustrating the operation of a SIM card attachment/detachment guiding apparatus for a portable terminal according to the present invention, in which a portion of the apparatus is cut off;
FIG 9 is a bottom view showing a portable terminal according to the present invention, before the SIM card attachment/detachment guiding apparatus is operated; and
FIG 10 is a bottom view showing a portable terminal according to the present invention, after the SIM card attachment/detachment guiding apparatus is operated.

### DETAILED DESCRIPTION OF THE PREFERRED EMBODIMENTS

Hereinafter, preferred embodiments of the present invention will be described in detail with reference to the accompanying drawings.

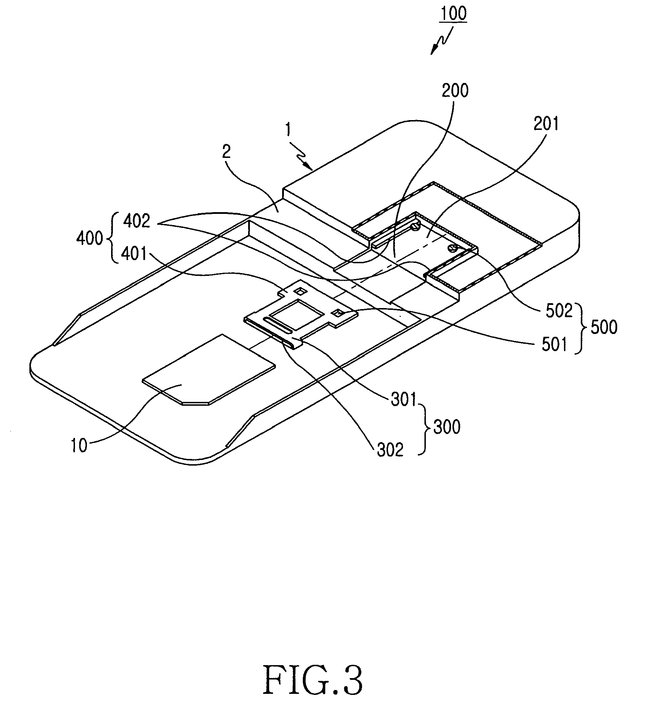

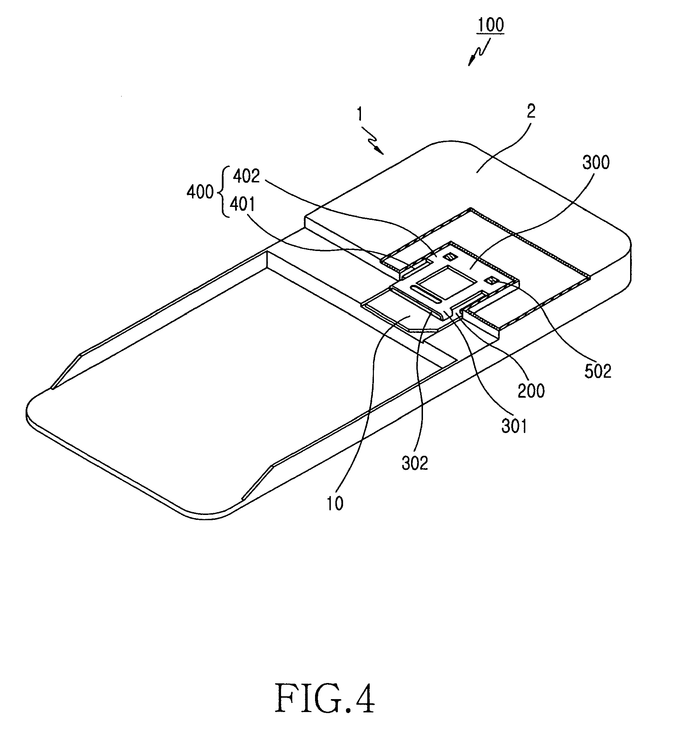

Referring to FIGs. 3 and 4, a SIM card attachment/detachment guiding apparatus 100 for a portable terminal 1 includes a lower casing frame 2 of a body of the portable terminal 1, which has an opening defined therein, a sliding guide 300, and guide means 400. The sliding guide 300 is stacked on the SIM card 10, and slides along with the SIM card 10 in contact with the SIM card 10 to enable the SIM card 10 to be inserted into and withdrawn from the opening 200 when a user pushes the sliding guide 300. The sliding guide 300 is slidably interconnected to the opening 200. The guide means 400 is provided into the opening 200 so that the sliding guide 300 can slide in the opening 200.

The sliding guide 300 and the SIM card 10 are stacked and have contact with each other in the opening 200. A movement space 201 is defined in the opening 200 and the sliding guide 300 is interconnected to and slides in the opening 200. At least one stopper 500 is formed to restrict movement of the sliding guide 300 when the sliding guide 300 is introduced into the opening 200.

As shown in FIG 3, each stopper 500 includes a stopper groove 501 and a stopper member 502. The pair of stopper grooves 501 receive the pair of stopper members 502 to restrict the introduction of the sliding guide 300, as described below, and are formed in the sliding guide 300 in order to withdraw the sliding guide 300 during detachment of the SIM card 10. The pair of stopper members 502 are inserted into the stopper grooves 501 to restrict movement of the sliding guide 300 when the sliding guide 300 is introduced into the movement space 201. The stopper members 502 are formed in the movement space 201, and are released from the stopper grooves 501 during the withdrawal of the sliding guide 300.

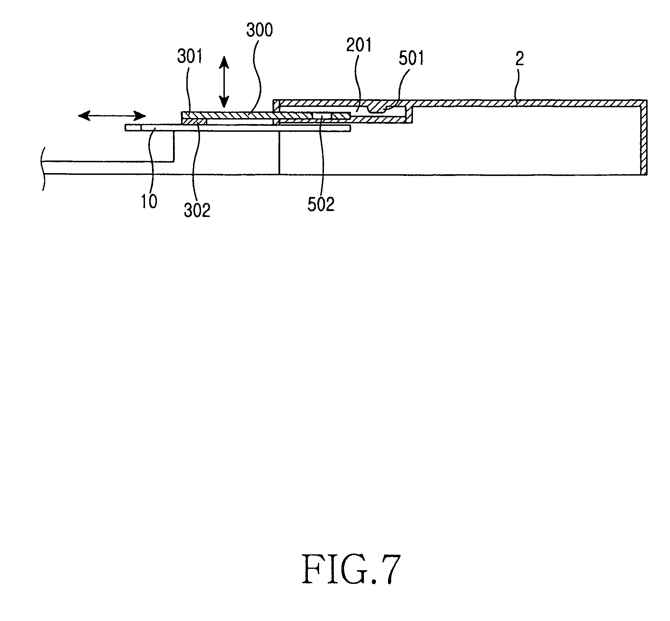

As shown in FIG 7, the stopper members 502 have a hemispheric shape and can be easily introduced into and released from the stopper grooves 501.

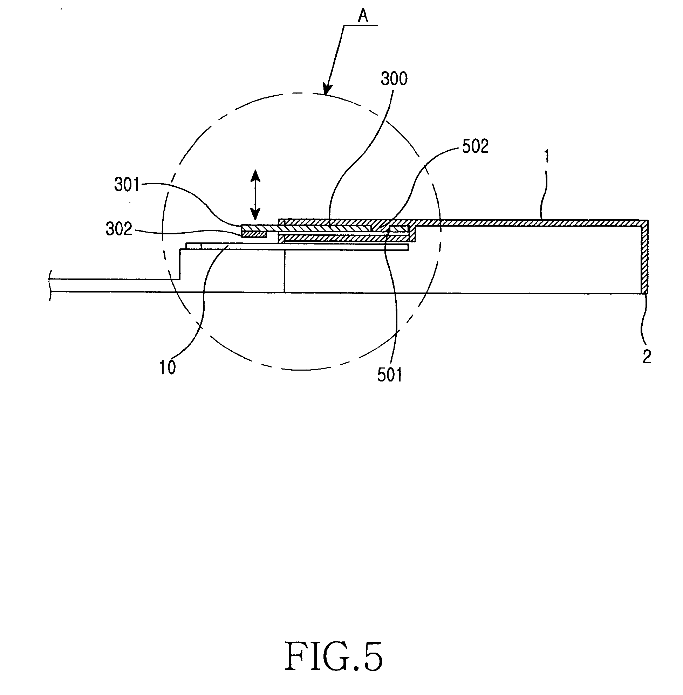

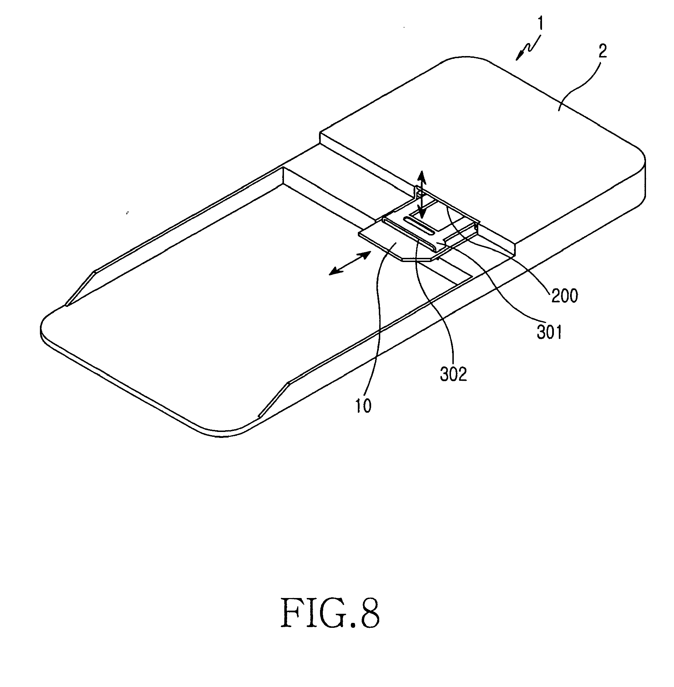

As shown in FIGs. 5 to 8, the sliding guide 300 includes a knob 301 and a contact member 302. The knob 301 is exposed to the outside, and can be held and pushed by the users' finger(s). The contact member 302 is provided on a lower surface of the knob 301 to come into contact with and slide along with the SIM card 10 when the knob 301 is pushed.

The contact member 302 can be made from rubber to easily come into contact with the surface of the SIM card 10.

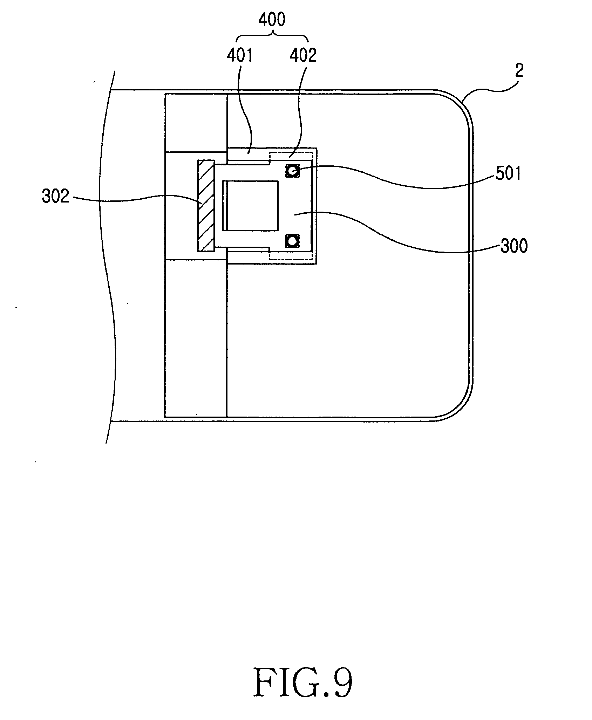

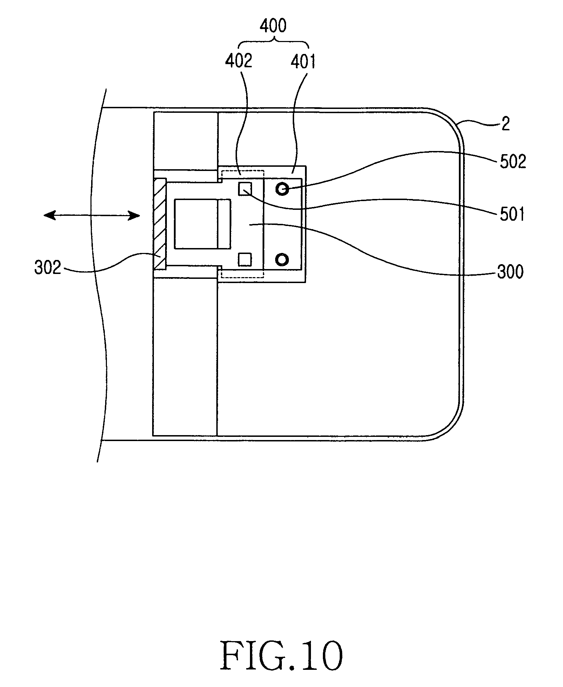

The guide means 400 includes a pair of guide rails 401 and a pair of guide members 402, as shown in FIGs. 9 and 10. The pair of guide rails 401 are formed on surfaces defining the movement space 201, and can be interconnected with the pair of guide members 402 so the guide members 402 slide along the guide rails 401. The pair of guide members 402 are interconnected with and slide along the pair of guide rails 401, and are formed on sides of the sliding guide 300 to move along the guide rail 401 during movement of the sliding guide 300.

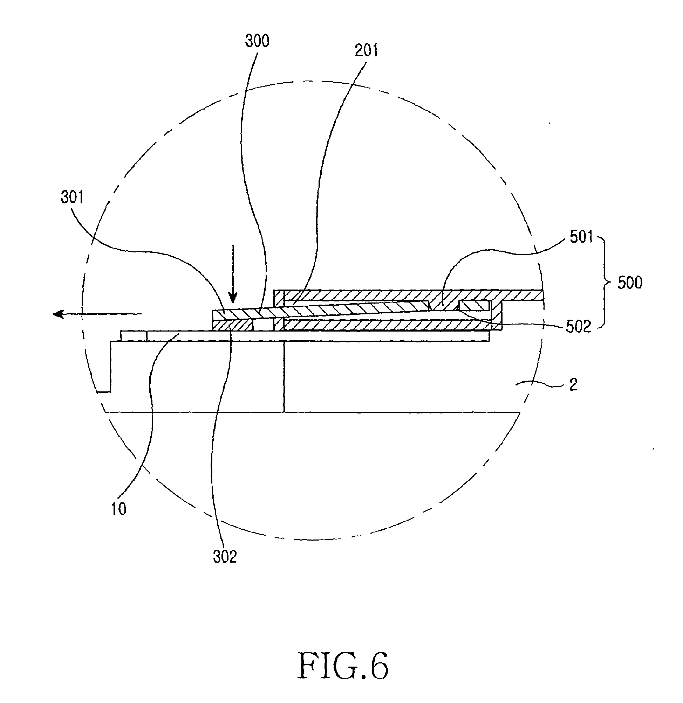

As shown in FIG 6, the sliding guide 300 can be made from an elastic material, and can bend at the time the knob 301 is pushed.

The operation of the SIM card attachment/detachment guiding apparatus 100 having the above-mentioned structure will be described with reference to FIGS. 3 to 10.

As shown in FIGS. 3 and 4, the SIM card attachment/detachment guiding apparatus 100 includes the lower casing frame 2 of the body of the portable terminal 1, which has the opening 200 defined therein, the sliding guide 300, and the guide means 400. The opening 200 has a movement space 201 defined therein. The sliding guide 300 is mounted in the movement space 201.

Since the pair of guide rails 401 of the guide means 400 are formed on both sides defining the movement space 201, the pair of guide members 402 formed on the sliding guide 300 can be interconnected with and slide along the guide rails 401.

The pair of stopper members 502 provided in the movement space 201 are received in the pair of stopper grooves 501 formed in the sliding guide 300, and restrict movement of the sliding guide 300. The SIM card 10 is mounted under the lower portion of the sliding guide 300 and is placed below the sliding guide 300.

In this state, as shown in FIGS. 6 to 8, when the user intends to withdraw the SIM card 10 from the portable terminal 1, the user first pushes the knob 301 of the sliding guide 300 exposed to the outside with his/her fingers.

The contact member 302 provided to the lower surface of the knob 301 is pushed along with the knob 301 at this time, and the contact member 302 comes into contact with the outer surface of the SIM card 10. When the user pulls his/her finger out of the opening 200, the knob 301 of the sliding guide 300 slides in a pulling direction, while the guide member 402 of the sliding guide 300 slides along the guide rail 401 in the movement space 402.

When the sliding guide 300 moves, the SIM card 10 moves along with the sliding guide 300, a part of which is withdrawn from the opening 200. The user then holds and simply separates the withdrawn SIM card from the portable terminal 1.

When the user inserts the SIM card 10 into the portable terminal 1 again, the SIM card 10 is inserted into and interconnected with the lower portion of the sliding guide 300. If the user pushes the knob 301 of the sliding guide 300 with his/her finger, the contact member 302 provided on the lower surface of the knob 301 comes into contact with the outer surface of the SIM card 10. Then, when the sliding guide 300 is pushed again toward the inside of the opening 200, the sliding guide 300 and the SIM card 10 slide together, and are introduced into the opening 200.

The pair of stopper grooves 501 formed in the sliding guide 300 slide along with the sliding guide 300, and are interconnected with the stopper members 502 provided in the movement space 201 to restrict movement of the sliding guide 300.

The stopper members 502 have a hemispheric shape, and can be easily separated and released from the stopper grooves 501.

A socket (not shown) provided to the SIM card then comes into electric contact with a terminal of a connector provided in the portable terminal 1.

The sliding guide 300 can be made from an elastic material, and provides elasticity to the knob 301 to allow the knob 301 to come into contact with the SIM card 10 when the sliding guide 300 is pushed by the users' finger.

The contact member 302 can be made of rubber, and comes into contact with the outer surface of the SIM card 10.

As described above, since the sliding guide 300 comes into contact with the SIM card 10 and slides along with the SIM card 10 when the sliding guide 300 is pushed, it is possible to easily attach and detach the SIM card 10 to/from the portable terminal 1.

The present invention can be applied to the body of all kinds of portable terminals.

While the invention has been shown and described with reference to a certain preferred embodiment thereof, it will be understood by those skilled in the art that various changes in form and details may be made therein without departing from the scope of the invention as defined by the appended claims.

## Claims

1. A Subscriber Identification Module (SIM) card attachment/detachment guiding apparatus (100) for a portable terminal (1), comprising:
a lower casing frame (2) of a body having an opening (200) defined therein;
a sliding guide (300) interconnected with and sliding in the opening (200), being stacked on a SIM card (10), and contacting and sliding along with the SIM card (10) to facilitate insertion and withdrawal of the SIM card (10) from the opening (200) when the sliding guide (300) is pushed; and
guide means (400) provided in the opening (200), for guiding a sliding movement of the sliding guide (300),
**characterized in that**
the sliding guide (300) includes a knob (301) exposed to an outside, and a contact member (302) on a lower surface of the knob (301) that contacts the SIM card (10) and moves along with the SIM card (10).

2. The apparatus according to claim 1, further comprising a movement space (201) defined in the opening (200), in which the sliding guide (300) is stacked on and interconnected to the SIM card (10) in the opening (200), and the sliding guide (300) is inserted so as to slide.

3. The apparatus according to claim 2, further comprising at least one stopper (500) formed in the movement space (201) to restrict movement of the sliding guide (300).

4. The apparatus according to claim 3, wherein a pair of stoppers (500) includes a pair of stopper grooves (501) formed in the sliding guide (300), and stopper members (502) formed in the movement space (201), and engaged with the stopper grooves (501) when the sliding guide (300) is inserted into the movement space (201) to restrict movement of the sliding guide (300) while being released from the stopper grooves (501), for withdrawing the sliding guide (300).

5. The apparatus according to claim 4, wherein the stopper members (502) have a hemispheric shape.

6. The apparatus according to claim 1, wherein the contact member (302) is made from rubber.

7. The apparatus according to claim 1, wherein the guide means (400) further comprises a pair of guide rails (401) formed on surfaces defining a movement space (201), and a pair of guide members (402) formed on sides of the sliding guide (300), and sliding along the pair of guide rails (401) during movement of the sliding guide (300).

8. The apparatus according to claim 1, wherein the sliding guide (300) is made from an elastic material.

## Patentansprüche

1. Vorrichtung (100) zum Führen des Einsetzens/Entnehmens einer SIM-Karte für ein tragbares Endgerät (1), die umfasst:
einen unteren Gehäuserahmen (2) eines Körpers mit einer darin ausgebildeten Öffnung (200);
eine Gleitführung (300), die mit der Öffnung (200) verbunden ist und in ihr gleitet, auf eine SIM-Karte (10) aufgesetzt ist, mit der SIM-Karte (10) in Kontakt ist und mit ihr zusammen gleitet, um Einführen der SIM-Karte (10) in die Öffnung (200) und Herausziehen aus ihr zu erleichtern, wenn die Gleitführung (300) geschoben wird; und
eine Führungseinrichtung (400), die in der Öffnung (200) vorhanden ist, um eine Gleitbewegung der Gleitführung (300) zu führen,
**dadurch gekennzeichnet, dass**
die Gleitführung (300) einen Knopf (301), der zu einer Außenseite freiliegt, sowie ein Kontaktelement (302) an einer Unterseite des Knopfes (301) enthält, das mit der SIM-Karte (10) in Kontakt kommt und sich zusammen mit der SIM-Karte (10) bewegt.

2. Vorrichtung nach Anspruch 1, die des Weiteren einen Bewegungsraum (201) umfasst, der in der Öffnung (200) ausgebildet ist, wobei die Gleitführung (300) in der Öffnung (200) auf die SIM-Karte (10) aufgesetzt und mit ihr verbunden wird, und die Gleitführung (300) so eingeführt wird, dass sie gleitet.

3. Vorrichtung nach Anspruch 2, die des Weiteren wenigstens einen Anschlag (500) umfasst, der in dem Bewegungsraum (201) ausgebildet ist, um Bewegung der Gleitführung (300) einzuschränken.

4. Vorrichtung nach Anspruch 3, wobei ein Paar Anschläge (500) ein Paar Anschlagnuten (501), die in der Gleitführung (300) ausgebildet sind, und Anschlagelemente (502) enthält, die in dem Bewegungsraum (201) ausgebildet sind und mit den Anschlagnuten (501) in Eingriff kommen, wenn die Gleitführung (300) in den Bewegungsraum (201) eingeführt wird, um Bewegung der Gleitführung (300) einzuschränken, während sie aus den Anschlagnuten (501) gelöst wird, um die Gleitführung (300) herauszuziehen.

5. Vorrichtung nach Anspruch 4, wobei die Anschlagelemente (502) eine halbkugelartige Form haben.

6. Vorrichtung nach Anspruch 1, wobei das Kontaktelement (302) aus Gummi besteht.

7. Vorrichtung nach Anspruch 1, wobei die Führungseinrichtung (400) des Weiteren ein Paar Führungsschienen (401), die an Flächen ausgebildet sind, die einen Bewegungsraum (201) bilden, und ein Paar Führungselemente (402) umfasst, die an Seiten der Gleitführung (300) ausgebildet sind und bei Bewegung der Gleitführung (300) an dem Paar Führungsschienen (401) entlang gleiten.

8. Vorrichtung nach Anspruch 1, wobei die Gleitführung (300) aus einem elastischen Material besteht.

## Revendications

1. Appareil (100) de guidage pour l'insertion/extraction d'une carte de module d'identification d'abonné, soit Subscriber Identification Module (SIM), pour un terminal portable (1), comprenant :
une monture de boîtier inférieure (2) d'un corps dans lequel est définie une ouverture (200) ;
un guide coulissant (300) glissant dans l'ouverture (200) et connecté à celle-ci, placé sur une carte SIM (10), établissant un contact et coulissant avec la carte SIM (10) pour faciliter l'insertion et l'extraction de la carte SIM (10) dans l'ouverture (200) lorsque le guide coulissant (300) est poussé ; et
un moyen de guidage (400) agencé dans l'ouverture (200) pour guider un déplacement coulissant du guide coulissant (300),
**caractérisé en ce que**
le guide coulissant (300) comprend une protubérance (301) exposée à l'extérieur, et un élément de contact (302) sur une surface inférieure de la protubérance (301) qui entre en contact avec la carte SIM (10) et se déplace avec la carte SIM (10).

2. Appareil selon la revendication 1, comprenant en outre un espace de déplacement (201) défini dans l'ouverture (200), dans lequel le guide coulissant (300) est agencé sur la carte SIM (10) et connecté avec celle-ci dans l'ouverture (200), et dans lequel le guide coulissant (300) est inséré de manière à glisser.

3. Appareil selon la revendication 2, comprenant en outre au moins une butée (500) formée dans l'espace de déplacement (201) pour restreindre le déplacement du guide coulissant (300).

4. Appareil selon la revendication 3, dans lequel une paire de butées (500) comprend une paire de rainures d'arrêt (501) formées dans le guide coulissant (300) et des éléments d'arrêt (502) formés dans l'espace de déplacement (201) et engagés avec les rainures d'arrêt (501) lorsque le guide coulissant (300) est inséré dans l'espace de déplacement (201) pour restreindre le déplacement du guide coulissant (300) et est libéré des rainures d'arrêt (501), de manière à retirer le guide coulissant (300).

5. Appareil selon la revendication 4, dans lequel les éléments d'arrêt (502) ont une forme hémisphérique.

6. Appareil selon la revendication 1, dans lequel l'élément de contact (302) est en caoutchouc.

7. Appareil selon la revendication 1, dans lequel le moyen de guidage (400) comprend en outre une paire de rails de guidage (401) formés sur des surfaces définissant un espace de déplacement (201), ainsi qu'une paire d'éléments de guidage (402) formés sur des côtés du guide coulissant (300), et glissant le long de la paire de rails de guidage (401) durant le déplacement du guide coulissant (300).

8. Appareil selon la revendication 1, dans lequel le guide coulissant (300) est en matériau élastique.
